# EUROPEAN PATENT SPECIFICATION

(11) **EP 0 409 267 B1**
(45) Date of publication and mention of the grant of the patent: **02.06.1993**
(21) Application number: 90113963.4
(22) Date of filing: 20.07.1990
(51) Int. Cl.: G01B 5/08, G01B 7/28

(54) **Apparatus for automatic measurement of the dimensions of solids of revolution**
Vorrichtung zum automatischen Dimensionsmessen von Rotationskörper
Appareil et procédé de mesure automatique des dimensions des solides de révolution

(30) Priority: 21.07.1989 IT 6761689
(43) Date of publication of application: 23.01.1991
(73) Proprietor: PRIMA INDUSTRIE S.p.A., 10121 Torino (IT)
(72) Inventor: Sartorio, Franco, I-10100 Torino (IT)
(74) Representative: Bongiovanni, Guido

(56) References cited:
- EP-A- 0 157 176
- EP-A- 0 199 927
- EP-A- 0 240 151
- EP-A- 0 315 575
- DE-A- 3 713 247
- GB-A- 2 203 837
- US-A- 4 562 392

## Description

The present invention relates to a device for the automatic measurement of the dimensions of solids of revolution, in particular for the automatic measurement of the diameters of shafts, hubs, discs and other similar mechanical workpieces;

It is known that in modern automated production processes it is necessary to have available measuring machines able to monitor the dimensions of the products in an entirely automatic manner (apart from loading the workpieces, which can be achieved either by robot manipulators or manually) and at a high speed, so that such machines are closely adaptable to the machine tools (lathes, grinders); normally two types of measuring machine are produced, a first type adapted to make measurements on elongate workpieces, such as shafts and rods, and a second type adapted to the measurement of "short" workpieces, that is those having, in dimensional terms, a diameter greater than its length, such as hubs, support discs and the like. In both cases the measurement is effected by utilising a pair of feeler devices of the absolute analogue type, which are brought up to opposite parts of the workpiece to be measured, along a common rectilinear axis, measuring their displacements until the analogue measuring elements come into contact with the workpiece. Measuring machines of the above-mentioned type have the disadvantage that, in order to measure diameters, they require the algebraic sum of at least four measurement axes in that the measurements involve the algebraic sum of the displacements of the carriages supporting the two feelers, and the analogue measurements of these. This drawback may be avoided according to EP-A-199705 using a C-shaped structure having on/off feeling devices. Moreover, for the measurement of shoulders orthogonal to the principal axis of the workpiece at least one other analogue measurement device with associated axis of displacement is required unless, according to EP-A-199927, the feelers may be selectively displaced in two different operating positions. Known machines of the type described are, however, of complex construction, need calibration and, by performing all the measurements by displacements contained in a single principal plane of the workpiece, are not able to measure eccentricity and are rather inflexible: for example, the shape of the machine is necessarily tied to the type of workpiece to be measured, so that machines for measuring shafts are structurally different from those for measuring hubs, thereby reducing the possibilities of economies of scale.

The object of the invention is that of providing a measuring device which is able to take measurements of mechanical workpieces in a rapid and precise manner utilising the minimum possible number of numerical control axes, and maintaining the same general machine structure both for long workpieces and for "short" workpieces.

The said object is achieved by the invention, as defined in Claim 1. For a better understanding of the invention a description of an embodiment will now be given with reference to the attached drawings, in which:
Figure 1 schematically illustrates the measuring device according to the invention;
Figures 2, 3 and 4 illustrate respective measurement stages which can be performed with the device of the invention;
Figures 5, 6 and 7 illustrate in detail various views in elevation of the measuring device of the invention; and
Figures 8 and 9 illustrate respective elevations of the device of Figures 5, 6 and 7 modified in such a way as to be able to measure elongate workpieces.

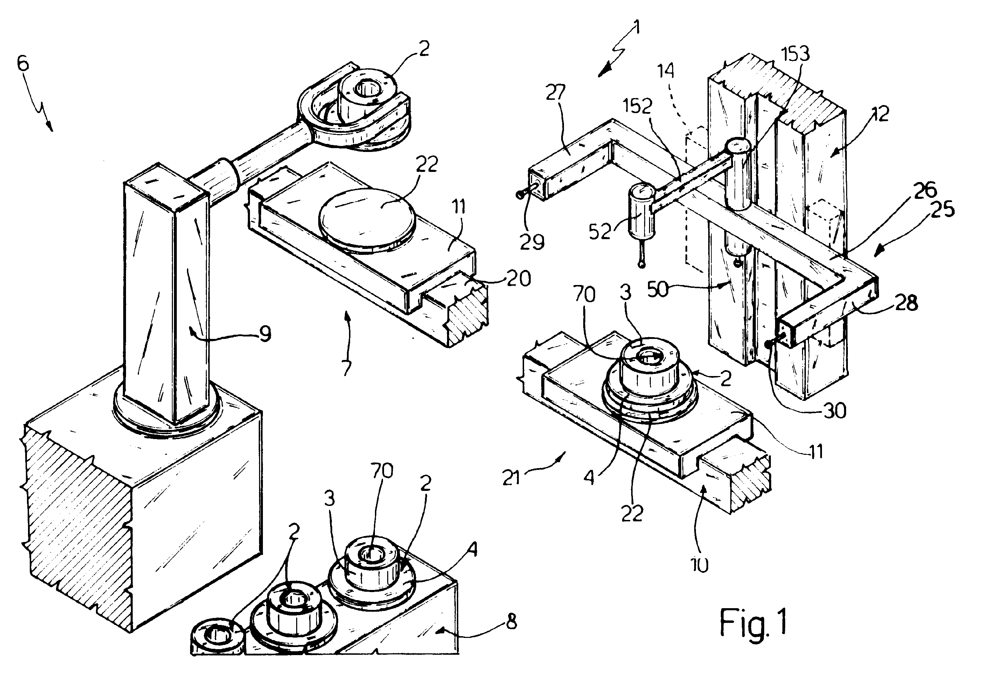

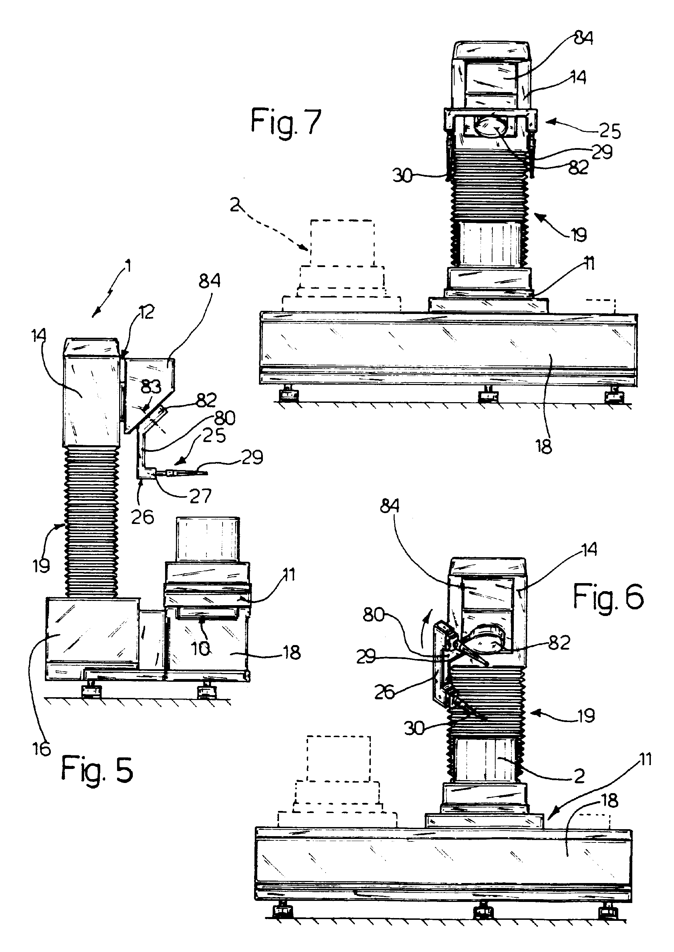

With reference to Figures 1 and 5, the reference numeral 1 indicates a device for effecting automatic measurement of the dimensions, in particular the diameters, of a mechanical workpiece 2, for example having two cylindrical abutments 3, 4 of different diameters and, more generally, of any solid of revolution; in the illustrated example the device 1 is served by an automatic loading station 6 having a zone 8 for stacking workpieces to be measured, a loading zone 7 and a robot manipulator 9 of known type acting to transfer the workpieces 2 from the storage zone 8 to the loading zone 7. This latter, according to the invention, is an integral part of the device 1, which has a first measurement axis 10 of the numerical control type on which the first carriage 11 is mounted in a controllably translatable manner and a second measurement axis 12, also of numerically controlled type, on which a second carriage 14 is mounted also in a controllably translatable manner; the numerical control axes 10 and 12 are, in the illustrated embodiment defined by respective rectilinear guides provided with suitable motor means for the carriages 11, 14 and detector means for detecting the position thereof with respect to a system of reference coordinates, all known and not illustrated for simplicity. For example, the carriages 11, 14 can be motorised by suitable servo-motors provided with encoders connected to an electronic central control unit 16. Moreover, according to the invention, the axis 12 is disposed perpendicularly to the plane in which the axis 10 is contained; in the illustrated example the axis 10 and the associated carriage 11 are supported horizontally by a bed 18, whilst the axis 12 and the associated carriage 14 are supported by a vertical column 19 disposed to one side of the bed 18.

The axis 10 has a length such as to define the loading zone 7 with its terminal end 20, when this is occupied by the carriage 11; therefore, in substance, the axis 10 is dimensioned in such a way as to be able to transfer the carriage 11 between the loading zone 7 and a measurement zone 21 disposed in correspondence with the column 19 so that the axis 10, as well as being the measurement axis, also functions as a workpiece transfer axis; the carriage 11, thanks to its position, is in fact adapted to receive and support the workpieces 2 to be measured, which are loaded and unloaded from it one at a time by the manipulator 9 when the carriage 11 is at its end of stroke position at the end 20 of the axis 10; for the purpose of supporting the workpieces 2 in a precise and fixed position the carriage 11 is further provided with support means which, in the case of short round workpieces, such as the workpiece 2 illustrated, consists of a workpiece carrier table 22 of the type provided with self-centring jaws (not illustrated) and preferably mounted for rotation on the carriage 11 parallel to the plane which contains the axis 10, and provided with its own independent motorisation.

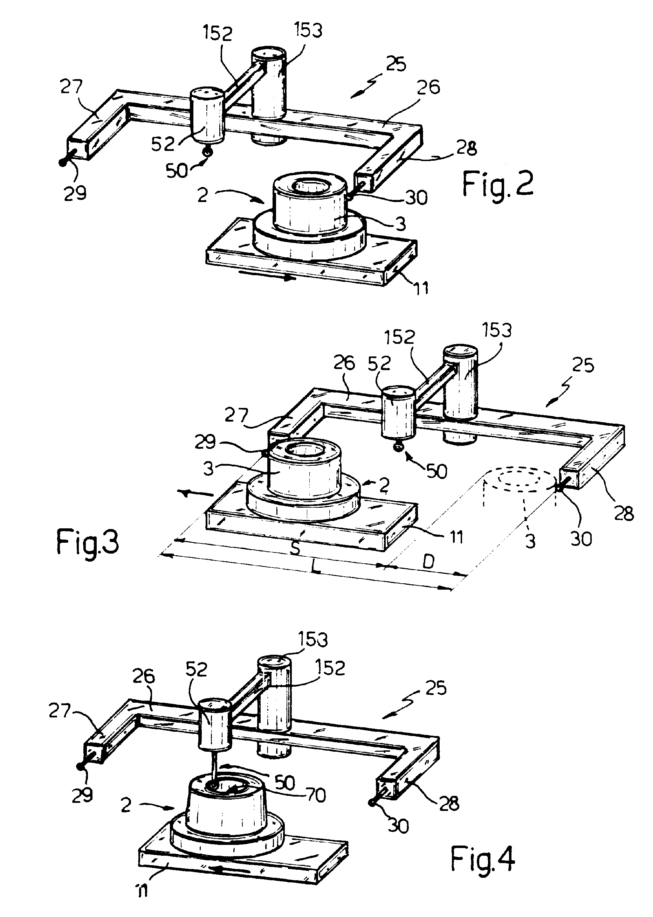

The second carriage 14 is on the other hand provided with a sensor system adapted to permit it to effect the desired measurement and which, in the illustrated example, is a contact system which is insensitive to the presence of possible oil or water films on the workpiece to be measured. The carriage 14 carries a forwardly projecting C-shape structure 25 lying in a plane parallel to that of the two numerical control axes 10, 12, which is utilised to effect measurement, in the illustrated example, in the case of short round workpieces, parallel to the axis 10 and, in particular, to the said plane containing the axis 10; the C-shape structure 25 is positioned with its open part facing away from the axis 12 and comprises a crosspiece 26 disposed parallel to the axis 10 and extending transversely of the axis 12, and a pair of arms 27, 28 formed on the opposite ends of the crosspiece 26 and each supporting a respective feeler device of known type, respectively 29 and 30, adapted to generate a signal for the central control unit 16 whenever it is carried into contact with the workpiece to be measured, in the illustrated example the workpiece 2, independently of the direction of contact; according to the invention the feelers 29, 30 project perpendicularly from the crosspiece 26 in a direction perpendicular to the axis 12, and the crosspiece 26 has a length such as to maintain a distance L between the feelers 29, 30 (Figure 3) greater than the maximum value measurable by the device 1, in the illustrated example the greatest nominal diameter stated to be measurable by the device 1; the feelers 29, 30, which are parallel and co-planar to one another at the same height, are preferably of the zero switching type, but the device 1 can function equally well by utilising feelers 29, 30 of the absolute analogue type or combinations thereof (to approach the workpiece to be measured in different directions). In any case, the length of the arms 27, 28 and of the associated feelers 29, 30 is such that the ends of these latter intended to come into contact with the workpiece 2 are located in the longitudinal median plane thereof, that is in diametral positions.

Also with reference to Figures 2 and 3, in order to effect measurement of the dimensions of the workpiece 2 and of short round workpieces generally, the sequence of operations is as follows. The workpiece 2 to be measured is mounted on the carriage 11, on which the workpiece 2 is then retained in a predetermined position by the table 22, by displacing the carriage 11 along the axis 10 into the loading zone 7 and operating the manipulator 9 in a suitable manner; then the carriage 11 with the workpiece 2 is carried into the measurement zone 21 by means of a displacement in an opposite sense along the axis 10. During this stroke, or as soon as it is terminated, the structure 25 is lowered along the column 19 in such a way as to bring it too into the measurement zone 21 as soon as the workpiece 2 has passed the position occupied by the feeler 29, that is as soon as the carriage 11 is located, in a horizontal sense, in correspondence with the crosspiece 10, between the arms 27 and 28; this pre-arrangement of the structure 25 is obtained by a displacement of the carriage 14 along the axis 12 until the feelers 29, 30 are brought, in a vertical sense, into correspondence with the cylindrical surface of the workpiece 2 the diameter of which it is desired to measure, for example the surface 3 the position of which is known in that the theoretical coordinates of the workpiece 2, referred to the position of the table 22 have been preliminarily memorised in the central control unit 16 by which the servo motors of the axes 10 and 12 are controlled.

At this point the measurement is initiated, which is performed by effecting a movement of the carriage 11 along the axis 10 and holding the structure 25 stationary on the axis 12: the carriage 11 is displaced in a predetermined direction, for example that illustrated by the arrow in Figure 2, and parallel to the common plane in which the feelers 29, 30 and the crosspiece 26 lie, in such a way as to intercept the workpiece 2, in the illustrated example the cylindrical surface 3 thereof, by the feeler 30. As soon as the feeler 30 touches the workpiece 2 (Figure 2) generation of a signal to the central control unit 16 is induced, which indicates that contact has taken place; the central control unit 16 now reverses the motion of the carriage 11, still holding the structure 25 stationary, which thus maintains the feelers 29, 30 fixed at a predetermined distance (L) from one another; simultaneously, the central control unit 16 starts, in a known way, to detect the space travelled by the carriage 11 during its return motion until the workpiece 2 is again intercepted by the second feeler 29 (Figure 3); at this point the central control unit 16, which has measured the value of the displacement S performed by the carriage 11 in the time interval between contact with the feeler 30 and the subsequent contact with the feeler 29, is able to calculate the value of the diameter D of the cylindrical surface 3 by subtracting from the value of the distance L between the feelers 29, 30, which is previously known and memorised in the central control unit 16, the absolute value of the relative displacement performed by the workpiece 2 with respect to the feelers 29, 30 in the time between the two successive contacts with these (which, in the illustrated example, is equal to the displacement S performed by the carriage 11) and, obviously, by also subtracting the known value of the dynamic radii of the two feelers 29, 30. In particular, the value of the distance L reduced by the value of the two dynamic radii of the feelers 29, 30 (which is now memorised in the central control unit 16 as a constant of the device 1) is obtained by measurement with the feelers 29, 30 of a workpiece of known, rigorously exact dimensions, introduced manually or automatically between the palpators 29, 30 "una tantum" when necessary.

The device 1 can also include a further feeler device 50 of known type (preferably of the zero switch type, but could also be of the absolute analogue type), which is also able to send a signal to the central control unit 16 whenever it is brought into contact with a workpiece 2 to be measured, similarly to the feelers 29, 30, and which is carried fixedly by the structure 25 perpendicularly to the feelers 29, 30, in the illustrated example by a linear actuator 52 carried fixedly on the crosspiece 26 by means of an arm 152 supported by a small column 153 in such a way as to position the feeler 50 in co-planar alignment with the ends of the feelers 29, 30 intended to come into contact with the workpiece to be measured; this actuator 52 is adapted to displace the feeler selectively, in a vertical direction between two end-of-stroke positions, in particular between a rest position, illustrated in Figures 1, 2 and 3, in which the feeler 50 is retracted towards the crosspiece 26, in which position it cannot interfere with the workpiece 2 to be measured while this is displaced between the feelers 29, 30, and a working position, illustrated in Figure 4, in which the feeler 50 is disposed beneath the arms 27, 28 in a position such as to be able to come into cooperative contact with the workpiece to be measured, positioned on the carriage 11, in the illustrated example with the workpiece 2, when the feelers 29, 30 are themselves in a vertical position such that they cannot interfere with the workpiece 2. As is illustrated in Figure 4, by means of this additional feeler 50 it is possible to measure internal diameters of the workpiece 2, for example the diameter of a central hole 70 within the cylindrical surface 3, by operating in a conventional manner with the single difference that the measurement is performed by holding the feeler still and causing the carriage 11 to translate, and not vice versa, as in the majority of known measurement machines. Once the carriage 11 and the workpiece 2 have been carried into the measurement zone 21 the feeler 50 is brought into working position by operation of the actuator 52 in such a way as to bring it, for example, into the interior of the hole 70 as soon as the workpiece 2 reaches the position under the feeler itself; then the carriage 11 is actuated to bring the feeler 50 into contact with the internal wall of the hole 70, the feeler being positioned in correspondence with the median plane of the workpiece 2; as soon as the feeler 50 touches the workpiece 2 a signal is sent to the central control unit 16 which reverses the movement of the carriage 11 and starts to memorise the displacement until the feeler 50 again contacts the internal wall of the hole 70 (from the opposite side this time) sending a new signal to the central control unit 16 which, on the basis of the displacement performed by the carriage 11 between the reception of the two feeler signals 50 calculates the diameter of the hole 70, taking into account the dynamic diameter of the feeler itself, just on the basis of this displacement. It is to be noted that the feeler 50 can be brought into the measurement position in the same "on/off" way previously described, or rather only when required, even without necessarily having an actuator able to move it vertically; for example, the feeler 50, in a possible variant not illustrated for simplicity, could be located at a fixed position at a suitable vertical height on the arm 152 and this could be made rotatable about the column 153; in this case the actuator 52 would consist of an apparatus adapted to control the arm 152 to rotate between the position illustrated, in which it is perpendicular to the crosspiece 26, and a rest position in which the arm 152 is located back against the crosspiece 26, substantially parallel thereto, so as to avoid interference between the workpiece to be measured and the feeler 50 whilst the feelers 29 and 30 are in use.

With reference to Figures 5, 6 and 7, which illustrate the preferred embodiment of the device 1 in detail, the supplementary feeler 50 is normally absent and in its place one of the two feelers 29, 30 is utilised for the measurement of internal diameters by positioning these in a suitable manner by means of a constructional arrangement. According to this arrangement, in fact, the crosspiece 26 is not directly mounted fixedly to the carriage 14 in a fixed position, but is fixed in correspondence with its middle, projecting transversely from an arm 80, which is disposed orthogonally of the plane containing the crosspiece 26 and the feelers 29, 30 (that is the plane in which the structure 25 lies); the arm 80 is in turn carried fixedly projecting radially from a motorised platform 82, which is rotatably carried about an axis 83 by a turret 84 projecting forwardly from the carriage 14. The platform 82 is mounted on the turret 84 in such a way that the axis 83 is disposed obliquely with respect to the numerical control axis 12 and, in particular, in such a way that it forms an angle of 45° with this latter. Therefore, from the normal working position of figures from 1 to 5, the structure 25 provided with the feelers 29, 30 can be made to rotate through 180° about the oblique axis 83 (Figure 6) by actuating the motorised platform 82 until it brings it into the inverted position illustrated in Figure 7. In this position the feelers 29, 30 are substantially vertical and parallel to the second numerical control axis 14, or rather are rotated through 90° on a vertical plane with respect to the position of Figure 5. Consequently it is possible to utilised one (or both) of the feelers 29, 30 as previously described in respect of the feeler 50, in such a way as to detect also internal diameters of the workpiece under test.

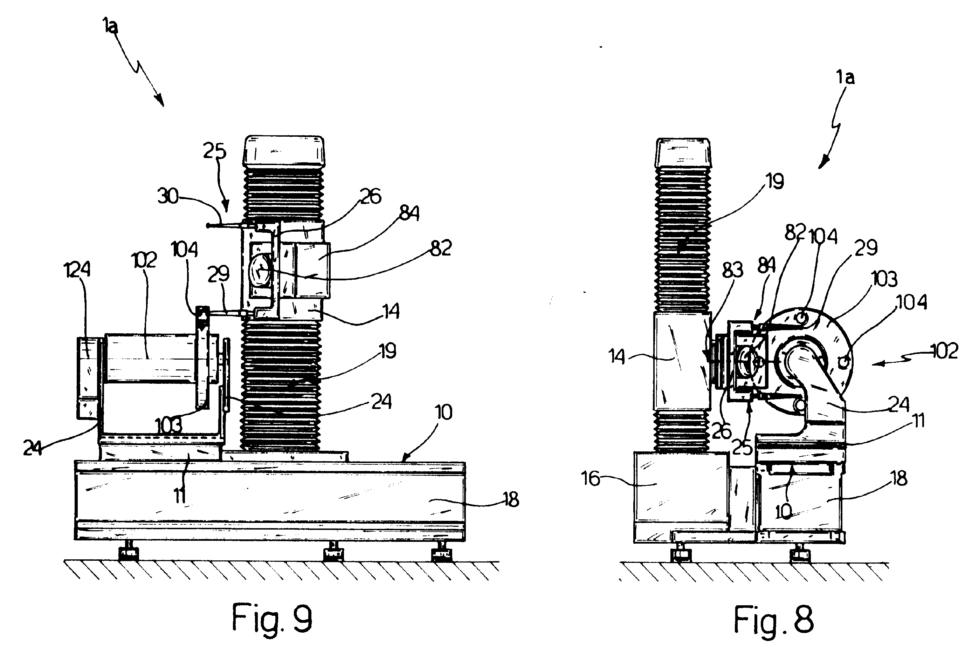

As illustrated in Figures 8 and 9, in the other case in which the workpiece to be measured is of elongate form, such as a shaft 102 for example provided with a flange 103 having holes 104, it is possible to utilise a device 1A entirely similar to the device 1 already described and in substance derivable from the device 1 with minimum modifications solely at the equipment level; the similar or identical details to those already described are indicated for simplicity with the same reference numerals.

In particular, the device 1A is formed by the same principle components as the device 1: the two numerical control axes 10, 12 and associated carriages 11, 14 and associated support structures 18, 19, the central control unit 16, the C-shape structure 25 with the associated projecting feelers 29, 30 supported by a predetermined distance L from one another by the crosspiece 26; the single difference consists in the fact that the turret 84 is mounted on the carriage 14 rotated through 90° with respect to the position in which it is assembled on the device 1, and by the fact that the carriage 11, rather than being equipped with the workpiece carrier table 22, is provided with support means of a type adapted to the workpiece 102 to be measured; in the illustrated example the carriage 11 is provided with a pair of opposite brackets 24 provided with spikes or other clamping devices, for example of the self-centring type used on lathes, which support the workpiece 102 at its opposite ends in such a way that this is disposed with its longitudinal median plane in correspondence with the ends of the feelers 29, 30; at least one of the brackets 24 is further provided with a motorised device 124 adapted to make the workpiece 102 rotate by predetermined angles around its longitudinal axis of symmetry.

In the case of long workpieces such as the workpiece 102 (Figure 8) the measurement of the diameter of the different engagements surfaces (for example the cylindrical surface 102 and the flange 103) is effected by bringing the carriages 11 and 14 into the measurement zone, disposing them in such a way that the cylindrical surface the diameter of which it is desired to measure is located in correspondence with the second numerical control axis 14 facing the crosspiece 26 and disposed between the feelers 29, 30, which are supported horizontally and perpendicular to the axis 10, the crosspiece 26 being supported by the carriage 14 in such a way as to be constantly parallel to the axis 12; then, by holding the carriage 11 stationary a measurement stroke is effected with the carriage 14; the structure 25 is, for example, lowered towards the carriage 11 and, as soon as the upper feeler 29 interferes with the surface the diameter of which it is desired to measure, for example the surface 102, a signal is sent to the central control unit 16, which reverses the motion of the carriage 14 and commences to memorise the displacement which it performs in its upward stroke until the lower feeler 30 comes into contact with the surface 102 sending a new signal to the central control unit 16, which stops the motion of the carriage 14 and commences calculation of the measured diameter, which, in this case too, will be equal to the difference between the distance L between the two feelers 29, 30 and the displacement S performed by the carriage of the numerical control axis which performs the measurement (in the illustrated example the carriage 14) in the time interval between the two signals sent to the central control unit 16, or rather in the time period in which the two feelers 29, 30 come successively into contact with the workpiece to be measured (less, obviously, the known dynamic diameter of the feelers 29, 30).

To perform measurement of internal diameters, for example the diameter of the holes 104, in this case too the same feelers 29, 30 can be utilised as are used for the measurement of external diameters, one at a time, having turned these through 90° effected by making the platform 82 turn through 180° about the axis 83 which, in this case too, given the form of the turret 84, is disposed obliquely and forming an angle of 45° with the first numerical control axis 10; by operating in the manner described, the C-shape structure 25 is turned over in such a way as to carry it from the position of Figure 8 to that of Figure 9; in this position it is possible, by means of displacement of the carriage 11, to carry one of the feelers 29, 30, for example the feeler 29, into the hole 104 the diameter of which it is desired to measure and, then, to effect measurement by displacing the carriage 14 first in one direction, for example upward and then, after the feeler 29 has come into contact against the inner wall of the hole 104, in the opposite direction until it once again comes into contact (on the opposite side this time) against the inner wall of the hole 104, the displacement performed by the carriage 14 in the time interval between the two contacts of the feeler 29 with the wall of the hole 104 providing the diameter thereof.

By utilising only one of the feelers 29, 30 positioned in one of the two possible positions (perpendicular to the axis of the workpiece to be measured or parallel thereto), in the specific example positioned in the position most convenient in dependence on the situation, it is also possible, finally, to effect measurement of the distance between parallel planes perpendicular to the longitudinal axis of the workpiece (shoulders) so as to detect the length or the thickness of the various cylindrical surfaces of the workpiece. For this purpose it is sufficient, by suitably displacing the feeler utilised and the workpiece (in such a way as to make it "straddle" this latter), sending the feeler itself into contact from opposite sides against the shoulders between which the distance is to be measured, calculating (less the dynamic diameter of the feeler being used) the displacement performed by the carriage which is displaced along the preselected measurement axis 10 or 12 in the time period between the two successive contacts between the feeler and the workpiece, in a manner similar to that effected for the measurement of the diameter of the hole 70.

Hence, a machine with only two numerical control axes can be used which, therefore, is very economical and for the most part can be used almost universally in that the two specialised devices 1 and 1a respectively for the measurement of short round workpieces and elongate workpieces have the same physical structure and the same components it being possible to obtain the device 1a from the device 1 simply by mounting the turret 84 rotated through 90° and by changing the equipment on the carriage 11 it is able to measure both short round workpieces and elongate workpieces; considerable economies of scale are therefore possible. Moreover, it is also possible to think of providing a single universal device simply by suitably motorising the turret 84 in such a way that this can be made to rotate on the carriage 14 so as to be disposed in the necessary position for each workpiece to be measured at the appropriate time. Use is made of a pair of feelers supported a fixed distance apart, which makes the measurement operations very fast and precise because it avoids having to straddle the workpiece at each diameter measurement with long and complex movements as would be necessary if a single feeler were utilised. It is further to be noted that the use of rotating support means for the workpiece to be measured allows any possible eccentricity in the workpieces also to be measured by effecting several measurements of the same diameter with the workpiece disposed in different angular positions.

## Claims

1. A device for the automatic measurement of the dimensions of solids of revolution, of the type comprising: a first and a second measurement axes (10, 12), said second axis (12) being disposed orthogonally to a plane containing said first axis (10); first support means (11,22;11,24) for a workpiece to be measured, said first support means being mounted for moving relatively along said first axis (10); second support means (14,25) for at least two opposite feeler devices (29,30) each feeler device being adapted to generate a signal whenever it is brought into contact with the workpiece to be measured, said second support means being mounted for moving relatively along said second axis (12); and means (80, 84) for selectively arranging said feeler devices (29,30) in a first and a second different working positions, in which workpieces of different shape can be measured by the same device;
**characterized** in that
said second support means comprise a carriage (14) and a C-shaped structure (25) carried in a cantilevered manner by said carriage (14) and comprising a cross-piece (26) and a pair of arms (27, 28), parallel to each other and projecting from opposite ends of said cross-piece (26) perpendicularly thereto, each said arm (27, 28) supporting a respective feeler device (29,30) and the cross-piece (26) having a length such as to maintain said feelers (29, 30) to a distance greater than the maximum value measurable by said device; in the first working position said cross-piece (26) being kept parallel to said first axis (10) and said C-shaped structure as a whole lying in a plane parallel to said plane containing said first axis (10), so that the device is able to measure the diameter of short round workpieces (2), in particular hubs; and in the second working position said cross-piece (26) being kept parallel to said second axis (12) and said C-shaped structure as a whole lying in a plane perpendicular to said plane containing said first axis (10), so that the device is able to measure the diameter of elongated workpieces (102), in particular shafts.

2. A device according to Claim 1, characterized in that the said measurement axes (10, 12) are axes of movement under numerical control, said first and second support means comprising a respective first (11) and second (14) carriage moving along said first (10) and second (12) axis, respectively.

3. A device according to Claim 2, characterized in that said first measurement axis (10) has a length such as to be able to displace the said first carriage (11) from a measurement zone (21) disposed in correspondence to said second measurement axis (12) to a loading zone (7) disposed in correspondence with one end (29) of said first measurement axis (10), and viceversa.

4. A device according to any of the preceding claims, characterized in that the said cross-piece (26) of the said C-shaped structure supports a third feeler device (50) in a predetermined position and in correspondence with a plane perpendicular to the said feelers carried by said arms (27,28) and passing through the ends thereof, the said third feeler device (50) being adapted to generate a signal whenever it is brought into contact with a workpiece to be measured, and means (52) for selectively displacing the said third feeler device (50) between a working position and a retracted, rest position.

5. A device according to claim 2 or 3, characterized in that said cross-piece (26) is mounted fixedly to a platform (82) carried rotatably by said second carriage (14) about an oblique axis (83) forming an angle of 45° with said second measurement axis (12).

6. A device according to Claim 5, wherein said cross-piece (26) is connected to said rotatable platform (82) eccentrically to the rotating axis thereof, being supported by an arm (80) orthogonal to the plane in which said C-shaped structure lies and projecting from said platform (82).

## Patentansprüche

1. Vorrichtung für die automatische Messung der Dimensionen von Rotationskörpern, von der folgende Teile umfassenden Gattung: eine erste Meßachse (10) und eine zweite Meßachse (12), von denen die zweite Achse (12) rechtwinklig zu einer die erste Achse (10) enthaltenden Ebene angeordnet ist; eine erste Halterung (11, 22; 11, 24) für ein zu vermessendes Werkstück, die für eine Bewegung relativ entlang der ersten Achse (10) montiert ist; eine zweite Halterung (14, 25) für wenigstens zwei sich gegenüberliegende Fühlervorrichtungen (29, 30), von denen jede dazu angepaßt ist, jedesmal dann ein Signal zu erzeugen, wenn sie in Kontakt mit dem zu vermessenden Werkstück gebracht wird, wobei diese zweite Halterung für eine Bewegung relativ entlang der zweiten Achse (12) montiert ist; und eine Einrichtung (80, 84) zur selektiven Anordnung der Fühlervorrichtungen (29, 30) in einer ersten Arbeitsstellung und in einer hiervon unterschiedlichen zweiten Arbeitsstellung, in denen Werkstücke unterschiedlicher Form durch die selbe Vorrichtung gemessen werden können;
dadurch gekennzeichnet, daß
die zweite Halterung einen Wagen (14) und einen C-förmigen Aufbau (25), der nach Art eines Auslegers vom Wagen (14) getragen wird und einen Querteil (26) und zwei Arme (27, 28), die zueinander parallel sind und von entgegengesetzten Enden des Querteils (26) im rechten Winkel zu diesem vorstehen, umfaßt, wobei jeder Arm (27, 28) eine jeweilige Fühlervorrichtung (29, 30) trägt und der Querteil (26) so lang ist, daß er die Fühler (29, 30) in einem Abstand hält, der größer ist als der maximale durch die Vorrichtung meßbare Wert; daß in der ersten Arbeitsstellung der Querteil (26) parallel zur ersten Achse (10) gehalten ist und der C-förmige Aufbau als Ganzes in einer Ebene parallel zur die erste Achse (10) enthaltenden Ebene liegt, so daß die Vorrichtung den Durchmesser kurzer runder Werkstücke (2), insbesondere von Naben, messen kann; und daß in der zweiten Arbeitsstellung der Querteil (26) parallel zur zweiten Achse (12) gehalten ist und der C-förmige Aufbau als Ganzes in einer Ebene liegt, die rechtwinklig zur die erste Achse (10) enthaltenden Ebene ist, so daß die Vorrichtung den Durchmesser von langgestreckten Werkstücken (102), insbesondere von Wellen, messen kann.

2. Vorrichtung nach Anspruch 1, dadurch gekennzeichnet, daß die Meßachsen (10, 12) Achsen einer Bewegung unter numerischer Steuerung sind und daß die erste und die zweite Halterung einen ersten Wagen (11) bzw. einen zweiten Wagen (14) umfassen, der sich entlang der ersten Achse (10) bzw. der zweiten Achse (12) bewegt.

3. Vorrichtung nach Anspruch 2, dadurch gekennzeichnet, daß die erste Meßachse (10) so lang ist, daß der erste Wagen (11) aus einer Meßzone (21), die in Übereinstimmung mit der zweiten Meßachse (12) angeordnet ist, zu einer Ladezone (7), die in Übereinstimmung mit einem Ende (29) der ersten Meßachse (10) angeordnet ist, und zurück verschiebbar ist.

4. Vorrichtung nach einem der vorhergehenden Ansprüche, dadurch gekennzeichnet, daß der Querteil (26) des C-förmigen Aufbaus in gegebener Stellung und in Übereinstimmung mit einer auf den von den Armen (27, 28) getragenen Fühlern senkrechten und durch deren Enden verlaufenden Ebene eine dritte Fühlervorrichtung (50) trägt, die zur Erzeugung eines Signals jedesmal dann, wenn sie in Berührung mit einem zu vermessenden Werkstück gebracht wird, gebaut ist, und außerdem eine Einrichtung (52) zum selektiven Verschieben der dritten Fühlereinrichtung (50) zwischen einer Arbeitsstellung und einer zurückgezogenen Ruhestellung trägt.

5. Vorrichtung nach Anspruch 2 oder 3, dadurch gekennzeichnet, daß der Querteil (26) fest auf eine Plattform (82) montiert ist, die um eine schräge Achse (83), die mit der zweiten Meßachse (12) einen Winkel von 45° einschließt, drehbar vom zweiten Wagen (14) getragen ist.

6. Vorrichtung nach Anspruch 5, bei der der Querteil (26) mit der drehbaren Plattform (82) exzentrisch zu deren Rotationsachse verbunden ist und von einem Arm (80) getragen wird, der im rechten Winkel zur Ebene, in der der C-förmige Aufbau liegt, absteht, und von dieser Plattform (82) vorsteht.

## Revendications

1. Dispositif de mesure automatique des dimensions de solides de révolution du type comprenant: un premier et un second axes de mesure (10, 12), le second axe (12) étant normal à un plan contenant le premier axe (10) ; des premiers moyens supports (11, 22 ; 11, 24) d'une pièce à mesurer, ces moyens étant prévus pour se déplacer le long du premier axe (10) ; des seconds moyens supports (14, 25) d'au moins deux palpeurs opposés (29, 30) générant un signal lorsqu'ils entrent en contact avec la pièce à mesurer, lesdits seconds moyens supports étant montés de telle manière qu'ils puissent se déplacer le long du second axe (12) ; et des moyens (80, 84) pour positionner lesdits palpeurs (29, 30) dans une première et une seconde position de travail, permettant la mesure de différentes formes de pièces par le même dispositif, caractérisé en ce que:
lesdits seconds moyens supports comportent un chariot (14) et une structure en C (25) entrainée en cantilever par ledit chariot (14) et comprenant une traverse (26) ainsi qu'une paire de bras (27, 28) parallèles qui s'étendent à partir des extrémités opposées de ladite traverse (26) et perpendiculairement à celle-ci, chacun de ces bras (27, 28) supportant un des palpeurs (29, 30), la longueur de la traverse (26) étant telle qu'elle maintient les deux palpeurs (29, 30) à une distance supérieure à la valeur maximale mesurable par le dispositif ; dans la première position de travail, ladite traverse (26) est maintenue parallèle audit premier axe (10) et l'ensemble formé par ladite structure en C est dans un plan parallèle au plan contenant le premier axe (10), de telle sorte que le dispositif est capable de mesurer le diamètre de petites pièces circulaires (2) telles que des moyeux ; et en seconde position de travail, la traverse (26) est maintenue parallèle au second axe (12) et l'ensemble formé par la structure en C est dans un plan perpendiculaire au plan contenant le premier axe (10), de sorte que le dispositif est capable de mesurer le diamètre de pièces allongées (102), telles que des cubes.

2. Dispositif selon la revendication 1, caractérisé en ce que lesdits axes de mesure (10, 12) sont des axes de déplacement sous contrôle numérique les premiers et seconds moyens supports comprenant un premier (11) et un second (14) chariot se déplaçant respectivement le long du premier (10) et du second (12) axe.

3. Dispositif selon la revendication 2, caractérisé en ce que le premier axe (10) de mesure a une longueur permettant le déplacement dudit premier chariot (11) depuis une zone de mesure (21) disposée en correspondance avec le second axe de mesure (12) vers une zone de chargement (7) placée au niveau d'une extrémité (29) dudit premier axe (10) de mesure, et vice versa.

4. Dispositif selon l'une quelconque des revendications précédentes, caractérisé en ce que la traverse (26) de la structure en C comporte un troisième palpeur (50) placé à un endroit prédéterminé et dans un plan perpendiculaire aux palpeurs situés sur les bras (27, 28) et passant par leurs extrémités, ledit troisième palpeur (50) étant prévu pour générer un signal dès lors qu'il entre en contact avec une pièce à mesurer, et des moyens (52) pour déplacer ledit troisième palpeur (50) entre une position de travail et une position escamotée de repos.

5. Dispositif selon l'une des revendications 2 et 3, caractérisé en ce que la traverse (26) est montée solidaire d'une plate-forme (82) rotative, transportée par le second chariot (14) selon un axe oblique (83) formant un angle de 45° avec le second axe de mesure (12).

6. Dispositif selon la revendication 5, dans lequel la traverse (26) est fixée à la plate-forme rotative (82) d'une manière excentrée par rapport à l'axe de rotation de celle-ci, et elle est supportée par un bras (80) orthogonal au plan de la structure en C, ledit bras (80) s'étendant depuis cette plate-forme (82).
